Europäisches Patentamt

European Patent Office

Office européen des brevets

(11) Publication number: **0 114 745**
**B1**

(12) **EUROPEAN PATENT SPECIFICATION**

(45) Date of publication of patent specification: **25.11.87**

(21) Application number: **84300294.0**

(22) Date of filing: **18.01.84**

(51) Int. Cl.⁴: **G 01 G 13/00,** G 01 G 19/32, B 65 B 37/18

(54) **Method and apparatus for supplying articles to be weighed in automatic weighing system.**

(30) Priority: **20.01.83 JP 8320/83**

(43) Date of publication of application:
**01.08.84 Bulletin 84/31**

(45) Publication of the grant of the patent:
**25.11.87 Bulletin 87/48**

(84) Designated Contracting States:
**DE FR GB IT**

(56) References cited:
**EP-A-0 063 042**
**GB-A-2 060 910**
**GB-A-2 074 329**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Kataoka, Koichi**
**343-2, Kitanakakouji Rittou-cho**
**Kurita-gun Shiga (JP)**
Inventor: **Kabumoto, Takashi**
**Azami-Sou 12-2, Mukaihata**
**Mukou-shi Kyoto (JP)**

(74) Representative: **Skone James, Robert Edmund et al**
**GILL JENNINGS & EVERY 53-64 Chancery Lane**
**London WC2A 1HN (GB)**

## Description

This invention relates to a method and apparatus for supplying articles to be weighed in an automatic weighing system of the combinatorial weighing type.

There is a combinatorial weighing-type automatic weighing system known in the art for automatically obtaining a batch of articles having a weight equal or closest to a target weight. A combinatorial-type automatic weighing system in practical use has a number of weighing machines each of which is provided with a weighing hopper. In carrying out weighing with such a system, the weighing hoppers are supplied with articles to be weighed, the weight of the articles in each weighing hopper is detected by the associated weighing machine, combinations of the weight values obtained from each of the weighing machines as well as the total weight of each combination are computed, a combination (referred to as the "optimum combination") whose total weight is equal or closest to a target weight is selected from among the available combinations, and only the articles in the weighing hoppers of the weighing machines corresponding to the selected optimum combination are discharged from these weighing hoppers, whereby there is obtained a batch of articles the weight whereof is equal· or closest to the target weight.

The automatic weighing system of the above-described type is equipped with a plurality of pool hoppers corresponding to and disposed above the weighing hoppers. The weighing hoppers which have discharged their articles, namely the weighing hoppers corresponding to the optimum combination, are immediately resupplied with articles by the corresponding pool hoppers so that these weighing hoppers will be ready for the next weighing cycle. Further, the pool hoppers left empty by supplying their articles to the weighing hoppers are themselves resupplied with articles distributed by a device which retains a supply of the articles.

However, with the conventional method and apparatus for supplying·articles described above, it is necessary that the number of pool hoppers be the same as the number of weighing machines (weighing hoppers), and that there be provided supply means such as vibratory troughs for supplying each and every pool hopper with articles. Accordingly, the conventional automatic weighing apparatus has a large number of component parts, is complex in construction and high in cost.

In accordance with one aspect of the present invention, apparatus for supplying articles to be weighed to an automatic weighing system of the type comprising a plurality of weighing machines each of which has a weighing hopper attached thereto, and first control means for discharging articles by opening solely gates of weighing hoppers which contain articles the total weight of which corresponds most closely to a desired weight comprises a plurality of supply means each supply means being associated with a pair of weighing hoppers; guide means associated with each supply means selectively actuable to cause articles to pass from the supply means to a selected one of the pair of weighing hoppers; drive means for causing articles to pass from the supply means via the guide means to the weighing hoppers; and second control means for controlling operation of the drive means in such a manner that when the first control means has caused a weighing hopper to discharge its contents the supply means is caused to supply further articles to that weighing hopper via the guide means.

In accordance with a second aspect of the present invention, a method of supplying articles comprises supplying articles to a plurality of weighing hopper sets each of which consists of a pair of weighing hoppers attached to respective weighing machines, and each set being associated with a respective single supply means; determining the weight of articles in each weighing hopper; computing total weights contained in different combinations of the plurality of weighing hoppers; discharging articles from those weighing hoppers for which the total weight of articles is closest to a desired weight; and supplying further articles from the supply means to the weighing hoppers which have discharged their articles.

In one example, each supply means comprises a pool hopper having a gate positioned in use above a respective pair of weighing hoppers, and each guide means comprises a tiltable chute positioned between the respective pool hopper and the respective pair of weighing hoppers so as to direct articles into a selected one of the weighing hoppers.

In another example each supply means comprises a pool hopper disposed in use above a respective pair of weighing hoppers, each pool hopper having two gates facing corresponding ones of the respective weighing hoppers in use, the two gates constituting the guide means.

The present invention provides a method and apparatus for supplying articles in an automatic weighing system, wherein it is possible to employ a number of pool hoppers and, hence, a number of means for supplying the pool hoppers with articles, which is half the number of weighing machines (weighing hoppers), thereby reducing the number of component parts as well as the cost of manufacture without diminishing the number of weighing machines or, in other words, while maintaining a prescribed weighing accuracy.

Some examples of automatic weighing systems incorporating apparatus and carrying out methods in accordance with the invention will now be described with reference to the accompanying drawings, in which:—

Figure 1 is a perspective view showing a principal portion of one example of the apparatus;

Figure 2 is a view of the left side of the apparatus shown in Figure 1;

Figure 3 is a view of the right side of the apparatus shown in Figure 1;

Figure 4 is an enlarged sectional view showing the principal portion of the drive apparatus shown in Figure 1;

Figure 5 is a longitudinal sectional taken on the line V—V in Figure 4;

Figure 6 is a block diagram of the control apparatus;

Figure 7 is a flowchart of processing for an article supply operation;

Figure 8 is an explanatory view of combination patterns generated by the control apparatus of Figure 6;

Figure 9 is an explanatory view of discharge flags generated by the control apparatus of Figure 6;

Figure 10 is a simplified longitudinal part sectional view of a principal portion of a modification of the first example;

Figure 11 is a perspective view showing a principal portion of a second example of the apparatus;

Figure 22 is a view of the left side of the apparatus shown in Figure 11;

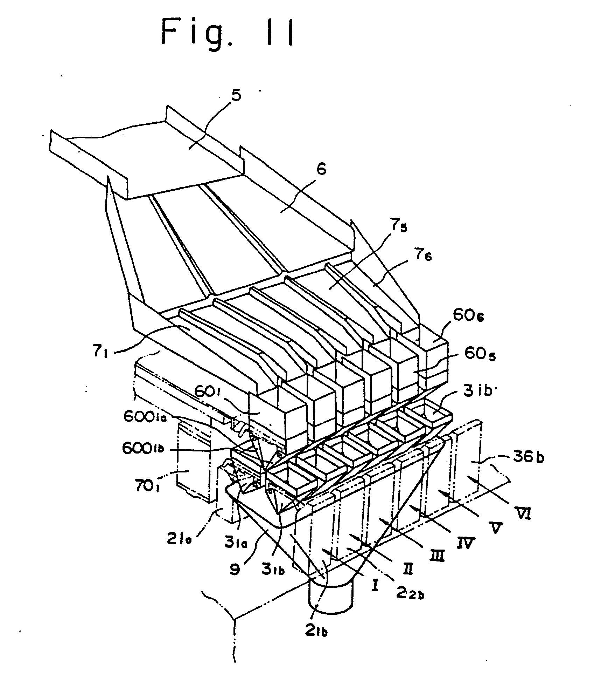

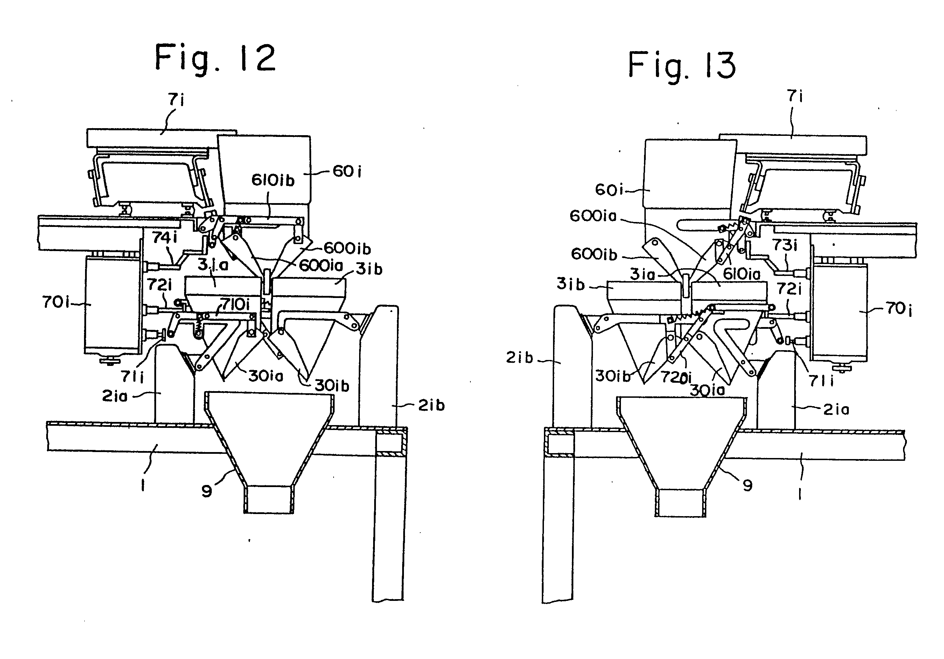

Figure 13 is a view of the right side of the apparatus shown in Figure 11;

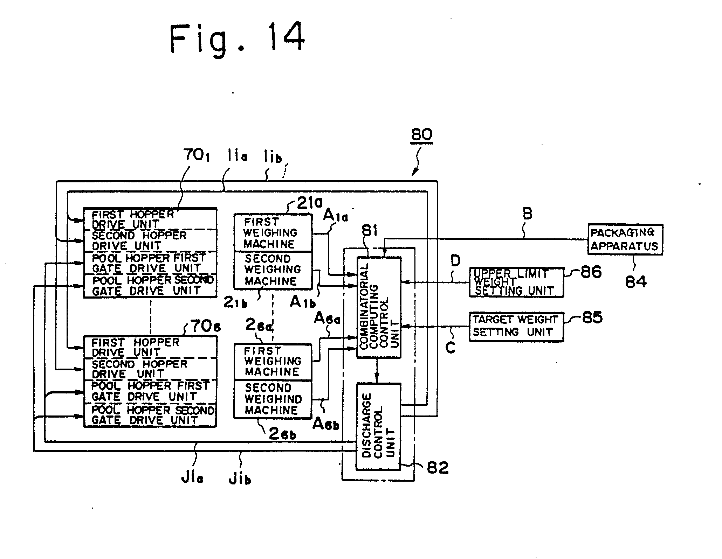

Figure 14 is a block diagram of the control apparatus;

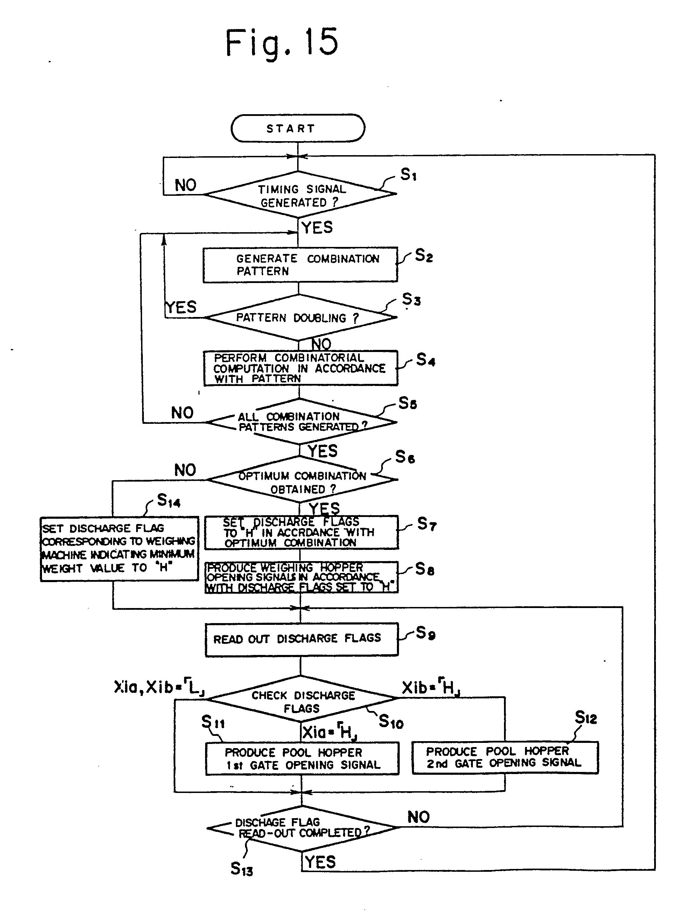

Figure 15 is a flowchart of processing for an article supply operation; and

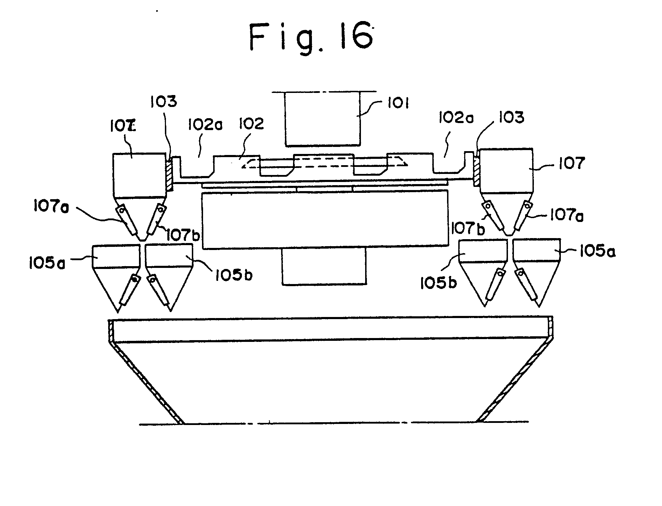

Figure 16 is a simplified part sectional view of a principal portion of a modification of the second example.

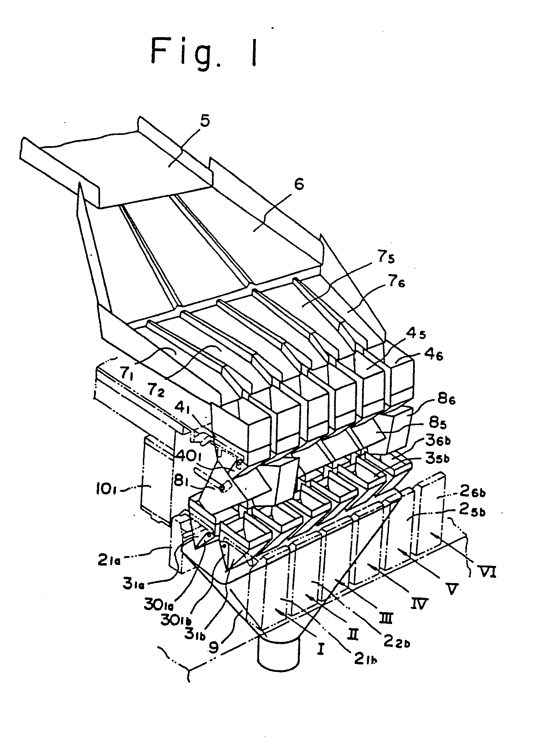

With reference to Figures 1 through to 3, an article supply apparatus according to a first embodiment of the present invention includes a row of first weighing machines $2_i$a and a row of second weighing machines $2_i$b mounted on a base 1. Each pair of opposing weighing machines $2_i$a, $2_i$b constitutes one set, of which there are six sets I through VI. The subscript "i" indicates the number of the set, where i=1~6. The first and second weighing machines $2_i$a, $2_i$b in each set are equipped with respective first and second weighing hoppers $3_i$a, $3_i$b. The first and second weighing hoppers $3_i$a, $3_i$b in each set oppose each other and are disposed closely together.

Disposed above the two weighing hoppers in each set is a single pool hopper $4_i$, giving a total of six pool hoppers which are arranged along a straight line. Provided between the pool hoppers $4_i$ and a device (not shown) for retaining a supply of articles to be weighed are a vibratory feed trough 5 for feeding in the articles from the last-mentioned device, a chute 6 disposed at an incline leading downwardly from the end of the feed trough 5, and vibratory article supply troughs $7_i$ extending from the lower end of the chute 6 to the upper part of respective ones of the pool hoppers $4_i$, the number (6) of the supply troughs $7_i$ being equal to the number of pool hoppers. Articles which have accumulated in the article retaining device are fed in by the feed trough 5, travel along the chute 6 and are supplied to the pool hoppers $4_i$ from the respective supply troughs $7_i$.

Disposed between the pair of weighing hoppers $3_i$a, $3_i$b in each set and the overlying pool hopper $4_i$ is a director chute $8_i$ (for a total of six director chutes in the illustrated embodiment) so adapted as to be tiltable between a position designating the first weighing hopper $3_i$a and a position designating the second weighing hopper $3_i$b in the set. Depending upon the direction in which the director chute $8_i$ is pointed, articles supplied to the corresponding pool hopper $4_i$ are discharged selectively into either the first weighing hopper $3_i$a or second weighing hopper $3_i$b upon passing through the corresponding director chute $8_i$ when a gate $40_i$ of the pool hopper $4_i$ is opened.

A single collecting hopper 9 is provided below the six sets of weighing hoppers $3_i$a, $3_i$b. When gates $30_i$a, $30_i$b of the respective weighing hoppers $3_i$a, $3_i$b are opened, the collecting hopper 9 collects the articles discharged from the weighing hoppers and delivers them to a packaging apparatus, which is not shown.

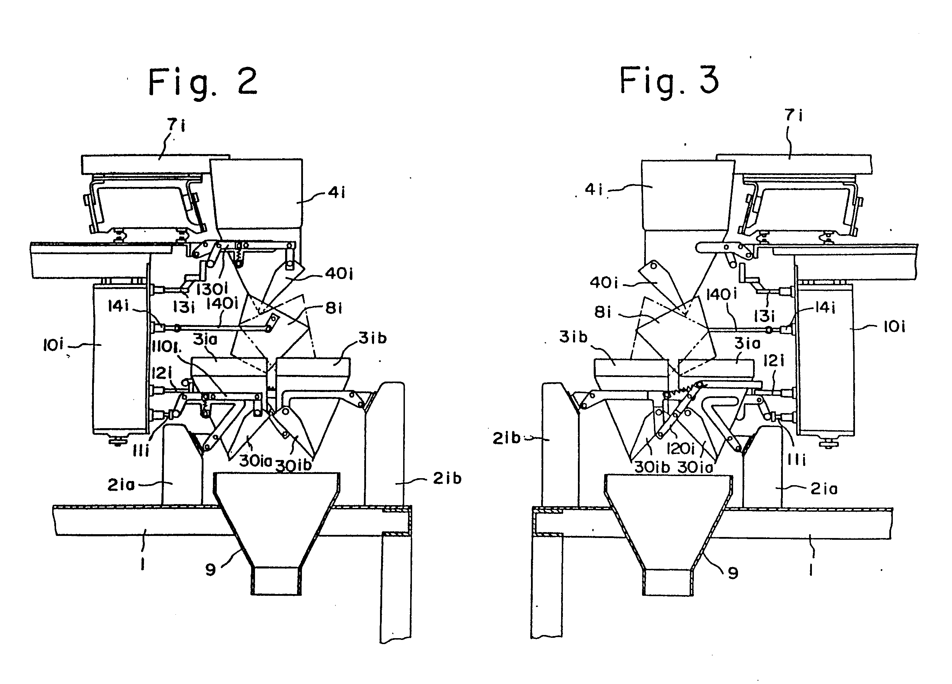

Thus, each of the sets I through VI comprises the first and second weighing hoppers $3_i$a, $3_i$b, the pool hopper $4_i$ and the director chute $8_i$. Provided for each set is a drive apparatus $10_i$, each of which includes four drive rods $11_i$, $12_i$, $13_i$ and $14_i$ (Figs. 2 and 3). The first drive rod $11_i$, by being thrust forward from the attitude shown in the drawings, opens the gate $30_i$a of the first weighing hopper $3_i$a through a link mechanism $110_i$. Likewise, the second drive rod $12_i$, by being thrust forward from the attitude illustrated, opens the gate $30_i$b of the second weighing hopper $3_i$b through a link mechanism $120_i$. Further, the third drive rod $13_i$, by being thrust forward from the attitude illustrated, opens the gate $40_i$ of the pool hopper $4_i$ through a link mechanism $130_i$. The fourth drive rod $14_i$, when in the retracted position shown in the drawings, tilts the director chute $8_i$ toward the first weighing hopper $3_i$a through an operating rod 140i and, when thrust forward from the illustrated attitude, tilts the director chute $8_i$ toward the second weighing hopper $3_i$b, i.e., into the attitude shown by the phantom lines, through the operating rod $140_i$.

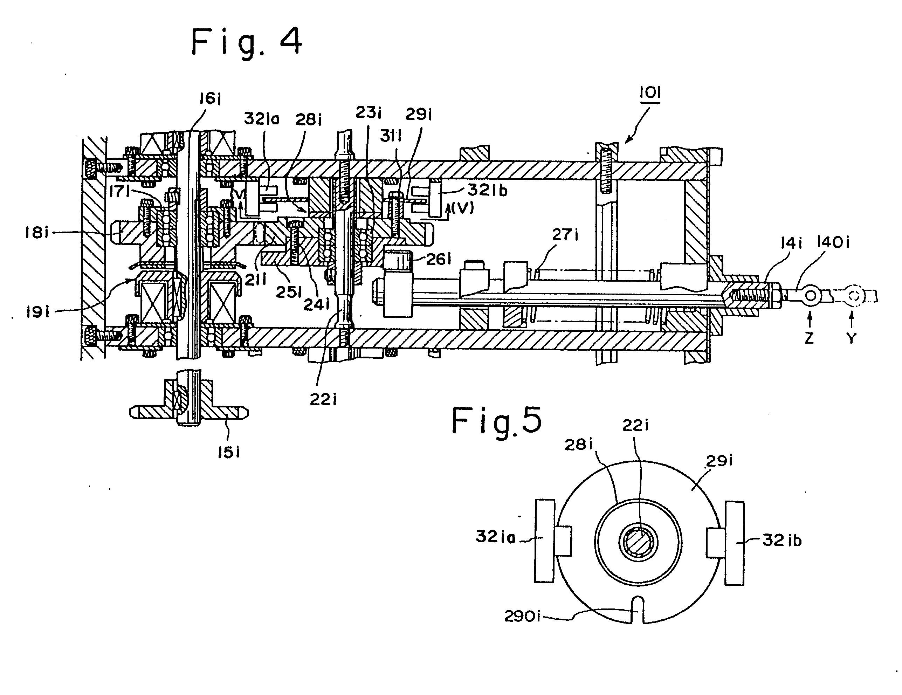

Reference will be had to Fig. 4 to describe the mechanism through which the drive rod $14_i$ is driven by the drive apparatus $10_i$. The mechanism includes a drive shaft $16_i$ rotated by a motor (not shown) acting through a drive chain (not shown) and a sprocket 15i. Mounted on the drive shaft $16_i$ are a drive gear $18_i$ supported rotatably by a bearing $17_i$, and a clutch $19_i$ for selectively engaging the drive gear $18_i$ with the drive shaft $16_i$. A driven gear $21_i$ meshing with the drive gear $18_i$ is rotatably supported through a bearing $23_i$ on a stationary shaft $22_i$ disposed in parallel with the drive shaft $16_i$. Secured to the driven gear $21_i$ by a bolt $24_i$ is a cam plate $25_i$. The arrangement is such that a roller $26_i$ attached to the drive rod $14_i$ is in abutting contact with the outer circumferential surface of the cam plate $25_i$. The drive rod $14_i$ is biased to the left in the illustration at all times by a spring 27i. Accordingly, the roller $26_i$ is constantly urged against the outer circumferential surface of the cam plate $25_i$. With such an

arrangement, rotating the cam plate $25_i$ causes the drive rod $14_i$, and the operating rod $140_i$ connected to the drive rod, to be reciprocated between the retracted position Z, namely the attitude indicated by the solid lines, and the projected position Y, namely the attitude shown by the phantom lines. When the drive rod $14_i$ and operating rod $140_i$ are in the retracted position Z, the director chute $8i$ is pointed toward the first weighing hopper $3_i a$. When the rods are in the projected position Y, the director chute $8_i$ is pointed toward the second weighing hopper $3_i b$.

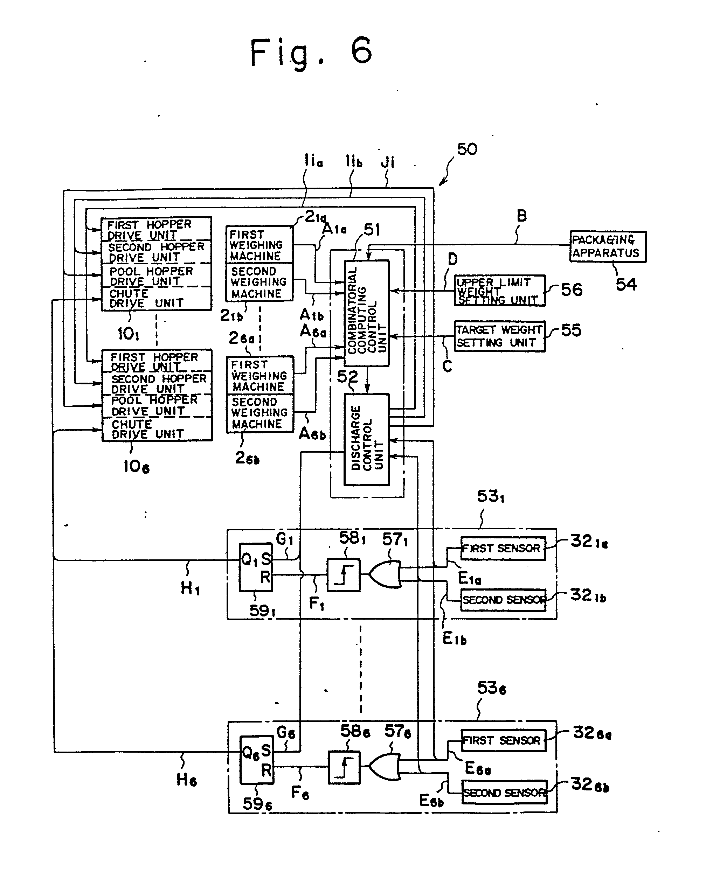

Mounted on the stationary shaft $22_i$ to oppose the driven gear $21_i$ is a brake $28_i$ for forcibly stopping the rotation of the driven gear $21_i$. Secured to the driven gear $21_i$ by a bolt $31_i$ is an annular light-shielding disk $29_i$ having a centrally provided hole which receives the brake $28_i$. As shown in Fig. 5, the light-shielding disk $29_i$ has a single slit $290_i$. Disposed on the right and left sides of the disk as shown in the drawing are first and second photosensors $32_i a$, $32_i b$, respectively, each comprising, e.g., a light-emitting diode and a phototransistor. The design is such that when the drive rod $14_i$ is situated at the retracted position Z by rotation of the driven gear $21_i$ and cam plate $25_i$, the slit $290_i$ of the light-shielding disk $29_i$ coincides with the position of the first photosensor $32_i a$, and such that when rotation of the driven gear and cam plate brings the drive rod $14_i$ to the projected position Y, the slit $290_i$ coincides with the position of the second photosensor $32_i b$.

It should be noted that the drive rods $13_i$, $11_i$ and $12_i$ for opening and closing the gates $40_i$, $30_i a$ and $30_i b$ of the pool hopper $4_i$ and weighing hoppers $3_i a$, $3i_b$, respectively, are driven by mechanisms similar to that shown in Fig. 4. These mechanisms are accommodated within the drive apparatus $10_i$ and each is driven by the same drive shaft, namely the drive shaft $16_i$.

Described next in conjunction with Fig. 6 is a control apparatus for actuating the drive apparatus $10_i$ to control the open/close operation of the gates of the weighing hoppers $3_i a$, $3_i b$ and pool hopper $4_i$, as well as a changeover operation to change the direction in which the director chute $8_i$ is tilted.

The control apparatus, indicated at numeral 50, includes a combinatorial computing control unit 51, a discharge control unit 52, and drive control units $53_i$ ($53_1$ through $53_6$) for operating each drive apparatus $10_i$ ($10_1$ through $10_6$). The inputs to the combinatorial computing control unit 51 are weight signals $A_i a$, $A_i b$ from the respective first and second weighing machines $2_i a$, $2_i b$ in each set, a timing signal B received intermittently from a packaging apparatus 54 at a prescribed time interval, as well as a target weight signal C and upper limit weight signal D from a target weight setting unit 55 and upper limit weight setting unit 56, respectively. The results of computations performed by the combinatorial computing control unit 51 are delivered to the discharge control unit 52.

Each drive control unit $53_i$ comprises first and second photosensors $32_i a$ ($32_1 a$ through $32_6 a$) and $32_i b$ ($32_1 b$ through $32_6 b$), an OR circuit $57_i$ ($57_1$ through $57_6$) for receiving signals $E_i a$ ($E_1 a$ through $E_6 a$), $E_i b$ ($E_1 b$ through $E_6 b$) produced by the photosensors $32_i a$, $32_i b$, respectively, a differentiating circuit $58_i$ ($58_1$ through $58_6$) which receives the output of the OR circuit $57_i$, and a flip-flop circuit $59_i$ ($59_1$ through $59_6$) which receives the signal $E_i a$ or $E_i b$ as a reset signal $F_i$ ($F_1$ through $F_6$) through the action of the differentiating circuit $58_i$. The output signals $E_i a$, $E_i b$ of the first and second photosensors $32_i a$, $32_i b$ are also applied to the discharge control unit 52 as chute position signals indicating the position of the director chute $8_i$. The discharge control unit 52 delivers a set signal $G_i$ ($G_1$ through $G_6$) to the flip-flop circuit $59_i$. After the application of the set signal $G_i$, and until the application of the reset signal $F_i$, the flip-flop circuit $58_i$ delivers a chute drive signal $H_i$ ($H_1$ through $H_6$) to a chute drive unit in the corresponding drive apparatus $10_i$. The discharge control unit 52 also delivers first and second weighing hoppers opening signals $I_i a$, $I_i b$, and a pool hopper opening signal $J_i$, to first and second weighing hopper drive units and a pool hopper drive unit, respectively, constituting the drive apparatus $10_i$.

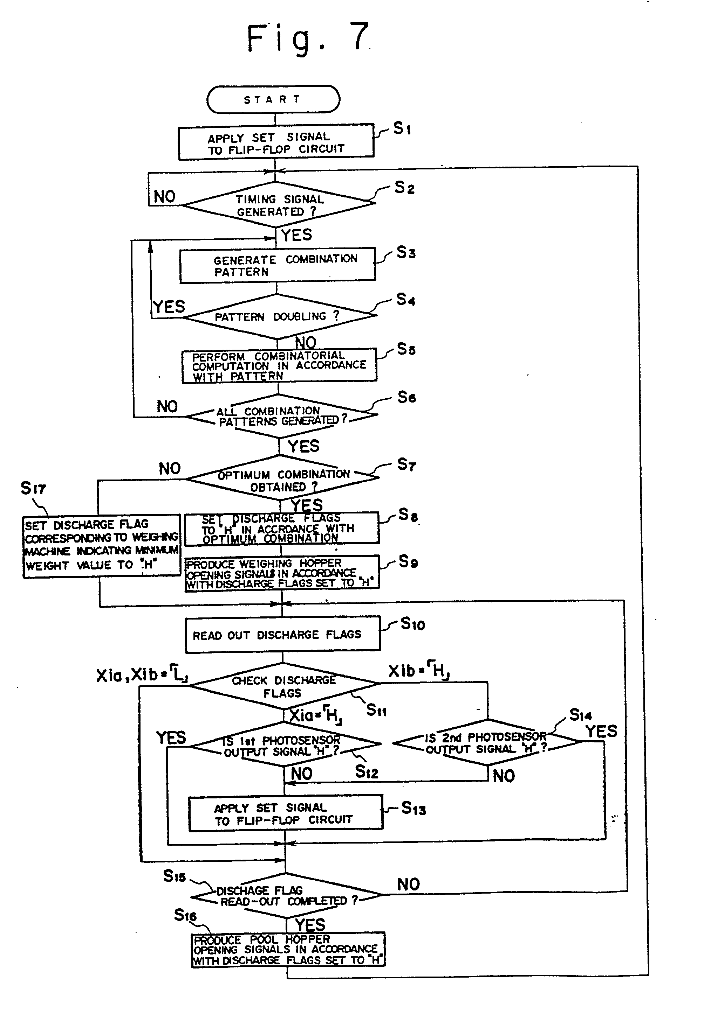

The operation of the first embodiment of the present invention will now be described with reference to the flowchart of Fig. 7.

First, by introducing electric power to the apparatus, the discharge control unit 52 in the control apparatus 50 produces the set signal $G_i$ applied to the flip-flop circuit $59_i$ of the corresponding drive control unit $53_i$. In response to the set signal $G_i$, the flip-flop circuit $59_i$ delivers the drive signal $H_i$ to the chute drive unit of the corresponding drive apparatus $10_i$, in response to which the clutch $19_i$ in the drive apparatus $10_i$ is actuated to engage the drive gear $18_i$ with the drive shaft $16_i$. This causes the cam plate $25_i$ to be rotated through the driven gear $21_i$, whereby the drive rod $14_i$ is thrust forward or retracted to tilt the director chute $8_i$. At the instant the director chute $8_i$ is pointing at the first or second weighing hopper $3_i a$ or $3_i b$, the slit $290_i$ of the light-shielding disk $29_i$, which rotates in unison with the cam plate $25_i$, will coincide with the position of the first or second photosensor $32_i a$ to $32_i b$, causing the particular photosensor to issue the chute position signal $E_i a$ or $E_i b$, whereby the reset signal $F_i$ is applied to the flip-flop circuit $59_i$ through the differentiating circuit $58_i$. In consequence, in the drive apparatus $10_i$, the clutch $19_i$ is disengaged to interrupt the transmission of rotating force to the drive gear $18_i$, and the brake $28_i$ is applied to halt the rotation of the driven gear $21_i$ and, hence, of the cam plate $25_i$. The drive rod $14_i$ contacting the cam plate $25_i$ through the roller $26_i$ therefore comes to rest at the retracted position Z, where the director chute $8_i$ tilts toward the first weighing hopper $3_i a$, or at the projected position Y, where the director chute $8_i$ tilts toward the second weighing hopper $3_i b$. The foregoing operations correspond to step S1 of the flowchart.

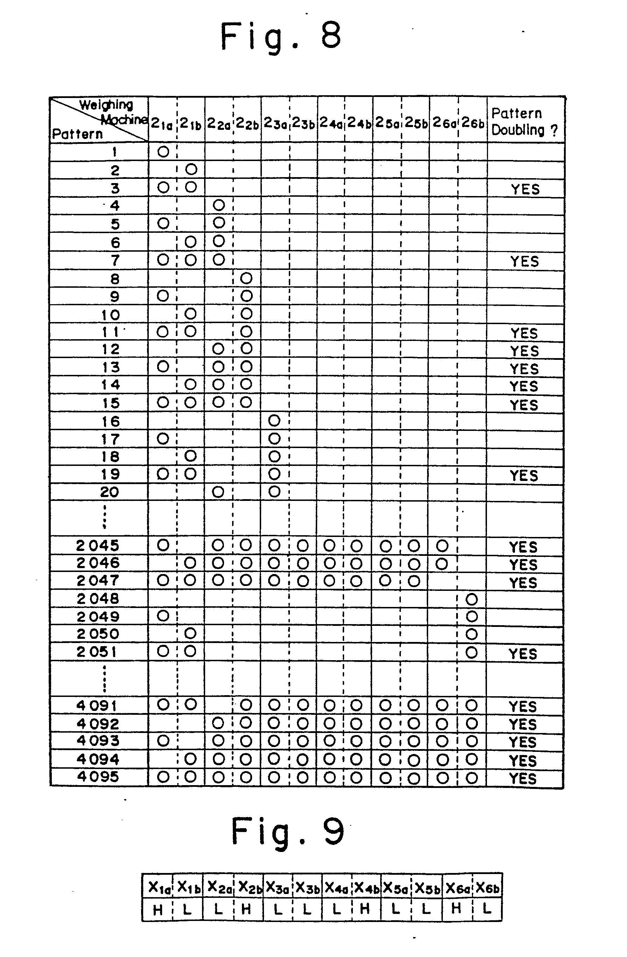

Next, in steps S2 through S5, the combinatorial computing control unit 51 of the control apparatus 50 successively generates a total of 4095 ($2^{12}-1$) combination patterns, shown in Fig. 8, of the 12 weighing machines $2_i a$, $2_i b$ upon receiving the timing signal B from the packaging apparatus 54. As each pattern is generated, it is determined (step S4) whether the pattern includes two weighing machines $2_i a$, $2_i b$, from the same set, i.e., whether doubling has occurred in the combination pattern. If it has, the next pattern is generated; if not, then a combinatorial computation is performed with respect to the weighing machines 2 . . . 2 corresponding to the pattern. Thus, step S2 through S5 exclude patterns which select two weighing machines from the same set simultaneously.

In the illustrated embodiment, the generation of the combination patterns in step S3 takes place 4095 times in a weighing cycle. It should be noted, however, that the combinatorial computations are performed only with regard to the patterns in which doubling does not occur, or a total of 728 times in a weighing cycle. This reduces computation time. Further, though the above-described procedure wherein the two weighing machines $2_i a$, $2_i b$ in the same set are not selected in a combination pattern is the procedure preferred, it is permissible to adopt an arrangement in which two weighing machines from the same set may be selected at the same time. However, for the sake of simplifying the description, the invention will be described hereinafter based on the aforementioned preferred procedure only.

In the combinatorial computation mentioned above, the weight values indicated by the weight value signals A . . . A from the weighing machines 2 . . . 2 corresponding to a combination pattern are added, the difference is found between the resulting sum and the target value indicated by the target weight signal C from the target weight setting unit 55, the difference found is successively compared with differences obtained from subsequent combinatorial computations and, when all patterns have been generated, the combination pattern giving the smallest difference is selected. This corresponds to step S6 of the flowchart. Then, in step S7, if the sum of the weight values in the selected combination is appropriate in view of the value indicated by the upper limit weight signal D from the upper limit weight setting unit 56, this combination is judged to be the optimum combination.

Twelve discharge flags $X_i a$, $X_i b$ are provided for corresponding ones of the 12 weighing machines $2_i a$, $2_i b$ (weighing hoppers $3_i a$, $3_i b$). When the optimum combination pattern is selected in the foregoing manner, those discharge flags X . . . X which correspond to the optimum combination pattern are set to the H (high) level, as illustrated in the example of Fig. 9. Then, in accordance with the discharge flags X . . . X set to the H level, the discharge control unit 52 delivers the first and second hopper opening signals I . . . I to the corresponding first and second weighing hopper drive units of the drive apparatus $10_i$. The foregoing operations correspond to steps S8 and S9 of the flowchart. As a result of these operations, the gates of the weighing hoppers 3 . . . 3 corresponding to the optimum combination are opened, so that the articles contained in these weighing hoppers are released into the collecting chute 9. This batch of collected articles, the weight whereof is equal or closest to the target weight, is supplied to the packaging apparatus.

During the discharge of the articles from the weighing hoppers 3 . . . 3 into the chute 9, the control apparatus 50 reads out the discharge flags $X_i a$, $X_i b$ set by set starting from the first set $X_1 a$, $X_1 b$, and checks the H, L levels of the flags. These are the steps S10, S11 in the flowchart. If, as shown in Fig. 9, $X_1 a$ is at the H level and $X1_b$ at the L level in the first set, i.e., if the first weighing hopper $3_1 a$ participates in the optimum combination and, hence, has discharged its articles, then the logic level of the output signal (chute position signal) $E_1 a$ from the first photosensor $32_1 a$ in the drive control unit $53_1$ is checked (step S12). When the signal $E_1 a$ is at the L level, namely when the director chute $8_1$ is not tilted toward the first weighing hopper $3_1 a$, the discharge control unit 52 delivers the set signal $G_1$ to the flip-flop circuit $59_1$ (step S13). As a result, the chute drive unit of the drive apparatus $10_1$ is actuated by the drive signal $H_1$ from the flip-flop circuit $59_1$, and the chute drive unit operates the director chute $8_1$, causing the director chute to tilt toward the first weighing hopper $3_1 a$. At this instant, the output signal $E_1 a$ of the first photosensor $32_1 a$ attains the H level, thereby applying the reset signal $F_1$ to the flip-flop circuit $59_1$, in response to which the operation of the director chute $8_1$ is halted. In this case, if the director chute $8_1$ is pointing toward the first weighing hopper $3_1 a$ from the beginning, the output signal $E_1 a$ of the first photosensor $32_1 a$ will be at the H level, so that the set signal $G_1$ for operating the director chute $8_1$ is not produced.

As regards to the second set where, in the illustrated example, discharge flag $X_2 a$ is at the L level and discharge flag $X2_b$ is at the H level, i.e., where the second weighing hopper $3_2 a$ participates in the optimum combination and, hence, has discharged its articles, the system moves from step S11 to a step S14, which is for checking the logic level of the output signal $E_2 b$ from the second photosensor $32_1 b$ in the drive control unit $53_2$. Then, as described above with regard to the first set, the set signal $G_2$ is produced when the director chute $8_2$ is not pointing toward the second weighing hopper $3_2 b$. In response to this signal, the director chute $8_2$ is tilted in the opposite direction, i.e., toward the second weighing hopper $3_2 b$. In a case where the discharge flags $X_i a$, $X_i b$ are both at the L level, the output signals $E_i a$, $E_i b$ of the photosensors $32_i a$, $32_i b$ are not checked, and the direction in which the director chute $8_i$ is pointing is not changed.

When all of the discharge flags $X_i a$, $X_i b$ are thus checked and the director chute $8_i$ in each set is tilted toward the weighing hopper which has discharged its articles, the discharge control unit 52, in accordance with the L, H levels of the discharge flags $X_ia$, $X_ib$, delivers the pool hopper opening signal $J_i$ to the pool hopper drive unit of the drive apparatus $10_i$. These operations correspond to steps S15 and S16. If either of the discharge flags $X_ia$, $X_ib$ in each set is at the H level, the pool hopper opening signal $J_i$ is delivered to the drive apparatus $10_i$ for that set. This causes the gate $40_i$ of the corresponding pool hopper $4_i$ to open, so that articles for the next weighing cycle are supplied through the director chute $8_i$ to the weighing hoppers 3 . . . 3 that have discharged their articles. Accordingly, since the two weighing hoppers $3_ia$, $3_ib$ in each set never discharge articles simultaneously, all of the weighing hoppers that have discharged their articles are supplied with articles by a single supply operation performed by the pool hoppers $4_i$.

When a negative decision is rendered in step S7, indicating that an optimum combination has not been obtained because, say, the upper limit weight has been exceeded, processing shifts to a step S17. According to step S17, none of the weighing hoppers discharge their articles, and only the discharge flag X corresponding to the weighing machine 2 giving the smallest weight value is set to the H level. Then, step S10 through S16 are performed, wherein either the director chute 8 is tilted toward the weighing hopper 3 corresponding to the abovementioned discharge flag X, or the corresponding pool hopper 4 is opened upon confirming that the director chute 8 is already pointing toward said weighing hopper. Thus, the weighing hopper 3 giving the smallest weight value is provided with an additional amount of the articles, and a combinatorial computation is performed again using weight data which are now different because of the changed weight value indicated by the supplemented weighing hopper.

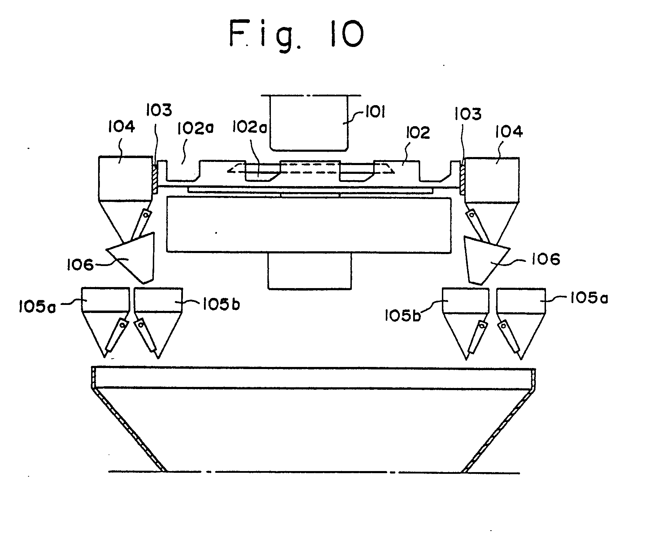

Fig. 10 is a schematic view showing an example in which the apparatus of the first embodiment is applied to an automatic weighing system of the type having a dispersing bowl 102 for dispersing articles to be weighed. The article supply apparatus in this application includes the dispersing bowl 102, which has a disk-shaped configuration provided with a plurality of openings 102a . . . 102a, and which is disposed below a chute 101 through which the articles drop, a plurality of pool hoppers 104 . . . 104 which are supplied with articles from corresponding ones of the openings 102a . . . 102a via corresponding gates 103 . . . 103, weighing hoppers 105a, 105b . . . 105a, 105b arranged in sets of two weighing hoppers each, with each set being disposed below a corresponding one of the pool hoppers 104 . . . 104, and a director chute 106 disposed between each pool hopper 104 and the corresponding set of two weighing hoppers 105a, 105b, the director chute being adapted so as to tilt selectively toward the weighing hopper 105a or 105b in the set, whereby the articles from the pool hopper 104 are selectively supplied to the weighing hopper 105a or 105b.

In the above application, the dispersing bowl 102 is provided at the center of the apparatus and the articles are supplied from the dispersing bowl 102 to each of the pool hoppers. However, the invention is not limited to this arrangement. For example, the invention can be applied to an arrangement disclosed in US—A—4,398,612 (corresponding to GB—A—2074329, in which there is a centrally disposed dispersing table and a plurality of radially arranged troughs encircling the dispersing table. With such a configuration, articles supplied to the dispersing table are fed into the pool hoppers through corresponding ones of the troughs.

Next, a second embodiment of an article supply apparatus according to the present invention will be described with reference to Figs. 11 through 13.

As in the first embodiment, the article supply apparatus includes the 12 weighing machines $2_ia$, $2_ib$ mounted on the base 1 in six sets of two weighing machines each, as well as the first and second weighing hoppers $3_ia$, $3_ib$ corresponding to the weighing machines $2_ia$, $2_ib$. Disposed above the two weighing hoppers in each set is a single pool hopper $60_i$, giving a total of six pool hoppers which are arranged. Provided between the pool hoppers $60_i$ and the device (not shown) for retaining a supply of articles are a vibratory feed trough 5 for feeding in the articles from the device, the chute 6 disposed at an incline leading downwardly from the end of the feed trough 5, and the vibratory article supply troughs $7_i$ extending from the lower end of the chute 6 to the upper part of respective ones of the pool hoppers $60_i$. The collecting chute 9 is disposed below the weighing hoppers $3_ia$, $3_ib$. The construction described so far is identical with that of the first embodiment.

The characterizing feature of the article supply apparatus according to the second embodiment of the invention resides in the fact that each pool hopper $60_i$ is equipped with first and second gates $600_ia$, $600_ib$ corresponding to the pair of underlying first and second weighing hoppers $3_ia$, $3_ib$. When either of the first and second gates $600_ia$, $600_ib$ is opened, the articles contained in the pool hopper thereof are supplied to the first or second weighing hopper, namely the weighing hopper corresponding to the open gate.

Provided for each set is a drive apparatus $70_i$, each of which includes four drive rods $71_i$, $72_i$, $73_i$ and $74_i$ (Figs. 12 and 13). The first drive rod $71_i$, by being thrust forward from the attitude shown in the drawings, opens the gate $30_ia$ of the first weighing hopper $3_ia$ through a link mechanism $710_i$. Likewise, the second drive rod $72_i$, by being thrust forward from the attitude illustrated, opens the gate $30_ib$ of the second weighing hopper $3_ib$ through a link mechanism $720_i$. This arrangement is similar to that of the first embodiment. In the second embodiment, however, the third drive rod $73_i$, by being thrust forward from the attitude illustrated, opens the first gate $600_ia$ of the pool hopper $60_ia$ through a link mechanism $610_i$. The fourth drive rod $74_i$, by being thrust forward from the attitude illustrated, opens the second gate $600_ib$ of the pool hopper $60_ia$ through a link mechanism $610_b$.

Reference will now be had to Fig. 14 to describe the control apparatus for controlling the operation of the drive apparatus $70_i$.

The control apparatus, indicated at numeral 80, includes a combinatorial computing control unit 81 and a discharge control unit 82. The inputs to the combinatorial computing control unit 81 are weight signals $A_ia$, $A_ib$ from the respective first and second weighing machines $2_ia$, $2_ib$ in each set, a timing signal B received from a packaging apparatus 84, as well as a target weight signal C and upper limit weight signal D from a target weight setting unit 85 and upper limit weight setting unit 86, respectively. On the basis of computed results received from the combinatorial computing control unit 81, the discharge control unit 82 delivers first and second weighing hopper opening signals $I_ia$, $I_ib$ to first and second weighing hopper drive units, respectively, in the drive apparatus 70i, and delivers first and second gate opening signals $J_ia$, $J_ib$ to pool hopper first and second gate drive units, which are also provided in the drive apparatus 70i.

The operation of the control apparatus will now be described with reference to the flowchart of Fig. 15.

As in the first embodiment of the present invention, combination patterns of the weight values from each of the weighing machines $2_ia$, $2_ib$ are generated in response to the timing signal B from the packaging apparatus, combinatorial computations are performed with regard to those combinations in which doubling does not occur in the patterns thereof, and an optimum combination is obtained (steps S1 through S6 of the flowchart in Fig. 15). Among the discharge flags $X_ia$, $X_ib$, those flags corresponding to the optimum discharge pattern are set to the H level, and the weighing hopper opening signals I ... I are delivered to the first and second weighing hopper drive units of the drive apparatus $70_i$ to open the weighing hoppers 3 ... 3 that correspond to the flags X ... X set to the H level (steps S7, S8). As a result of these operations, the weighing hoppers 3 ... 3 corresponding to the optimum combination are opened to provide a batch of the articles having a weight equal or closest to the target weight.

During the discharge of the articles from the weighing hoppers 3 ... 3, the control apparatus 80 reads out the discharge flags $X_ia$, $X_ib$ set by set starting from the first set $X_1a$, $X_1b$, and checks the H, L levels of the flags. These are the steps S9, S10 in the flowchart. If $X_1a$ is at the H level and $X1_b$ is at the L level in the first set, the first gate opening signal $J_1a$ for opening the first gate $600_1a$ of the pool hopper $60_1$ is delivered to the drive apparatus $70_1$ (step S11). If $X_2a$ is at the L level and $X2_b$ is at the H level in the second set, the second gate opening signal $J_2b$ for opening the second gate $600_2a$ of the pool hopper $60_2$ is delivered to the drive apparatus $70_2$ (step S12). Further, where the discharge flags $X_ia$, $X_ib$ are both at the L level, the gate opening signal J is not produced and the next combination is checked (step S13). Thus, articles for the next weighing cycle are supplied from the pool hoppers 60 ... 60 corresponding to the weighing hoppers 3 ... 3 that have discharged their articles. Since the two weighing hoppers $3_ia$, $3_ib$ in each set never discharge articles simultaneously, all of the weighing hoppers that have discharged their articles are supplied with articles by a single supply operation, irrespective of the fact that only one pool hopper is provided for each set of two weighing hoppers.

When an optimum combination is not obtained in step S6, processing proceeds as described earlier in connection with the first embodiment. Specifically, in step S14, the discharge flag X corresponding to the weighing machine 2 giving the smallest weight value is set to the H level. Then, steps S9 through S13 are performed, wherein an additional supply of articles is provided from the gate 600 of the pool hopper 60 corresponding to the weighing hopper 3 of the weighing machine which previously gave the smallest weight value.

Fig. 16 is a schematic view showing an example in which the apparatus of the second embodiment is applied to the automatic weighing system of the type having the dispersing bowl 102 for dispersing articles to be weighed. The article supply apparatus in this application includes the dispersing bowl 102, which has a disk-shaped configuration provided with the plurality of openings 102a ... 102a, and which is disposed below the chute 101 through which the articles drop, a plurality of pool hoppers 107 ... 107 which are supplied with articles from corresponding ones of the openings 102a ... 102a via corresponding gates 103 ... 103, each pool hopper 107 having two gates 107a, 107b, and the weighing hoppers 105a, 105b ... 105a, 105b arranged in sets of two weighing hoppers each, with each set being disposed below a corresponding one of the pool hoppers 107 ... 107. When the gate 107a of the pool hopper 107 is opened, the articles contained in the pool hopper 107 are supplied to the weighing hopper 105a. On the other hand, opening the gate 107b supplies the articles to the weighing hopper 105b.

In the above application, the dispersing bowl 102 is provided at the center of the apparatus, and the articles are supplied from the dispersing bowl 102 to each of the pool hoppers. However, the invention is not limited to this arrangement. For example, the invention can be applied to the above-described arrangement disclosed in US—A—4,398,612 (corresponding to GB—A—2074329), in which there is a centrally disposed dispersing table and a plurality of radially arranged troughs encircling the dispersing table. With such a configuration, articles supplied to the dispersing table are fed into the pool hoppers through corresponding ones of the troughs.

## Claims

1. Apparatus for supplying articles to be weighed to an automatic weighing system of the type comprising a plurality of weighing machines ($2_ia$, $2_ib$) each of which has a weighing hopper ($3_ia$, $3_ib$) attached thereto, and first control means (51) for discharging articles by opening solely gates of weighing hoppers which contain articles the total weight of which corresponds most closely to a desired weight, the apparatus comprising a plurality of supply means ($4_i$) each supply means being associated with a pair of weighing hoppers ($3_ia$, $3_ib$); guide means ($8_i$) associated with each supply means ($4_i$) selectively actuable to cause articles to pass from the supply means to a selected one of the pair of weighing hoppers; drive means ($10_i$) for causing articles to pass from the supply means ($4_i$) via the guide means ($8_i$) to the weighing hoppers ($3_ia$, $3_ib$); and second control means for controlling operation of the drive means ($10_i$) in such a manner that when the first control means has caused a weighing hopper to discharge its contents, the supply means is caused to supply further articles to that weighing hopper via the guide means.

2. Apparatus according to claim 1, wherein each supply means comprises a pool hopper ($4_i$) having a gate ($40_i$) positioned in use above a respective pair of weighing hoppers ($3_ia$, $3_ib$), and each guide means comprises a tiltable chute ($8_i$) positioned between the respective pool hopper and the respective pair of weighing hoppers ($3_ia$, $3_ib$) so as to direct articles into a selected one of the weighing hoppers.

3. Apparatus according to claim 1, wherein each supply means comprises a pool hopper ($60_i$) disposed in use above a respective pair of weighing hoppers ($3_ia$, $3_ib$), each pool hopper ($60_i$) having two gates ($600_ia$, $600_ib$) facing corresponding ones of the respective weighing hoppers in use, the two gates constituting the guide means.

4. Apparatus according to claim 2 or claim 3, wherein the drive means ($10_i$) operates the gates of the pool hoppers ($4_i$).

5. Apparatus according to any of the preceding claims, wherein the supply means ($4_i$) and guide means ($8_i$) are arranged in a straight line for supplying pairs of weighing hoppers ($3_ia$, $3_ib$) arranged along a straight line.

6. Apparatus according to any of claims 1 to 4, wherein the supply means ($4_i$) and guide means ($8_i$) are arranged in a circle for supplying pairs of weighing hoppers ($3_ia$, $3_ib$) arranged in a circle.

7. An automatic weighing system comprising a plurality of pairs of weighing machines ($2_ia$, $2_ib$) each of which has a weighing hopper ($3_ia$, $3_ib$) attached thereto, and first control means (51) for discharging articles by opening solely gates of weighing hoppers which contain articles the total weight of which corresponds most closely to a desired weight; and apparatus for supplying articles to be weighed according to any of the preceding claims, the drive means ($10_i$) being arranged to operate the gate of each weighing hopper ($3_ia$, $3_ib$).

8. A method of supplying articles, the method comprising supplying articles to a plurality of weighing hopper sets (I—VI) each of which consists of a pair of weighing hoppers ($3_ia$, $3_ib$) attached to respective weighing machines ($2_ia$, $2_ib$), and each set being associated with a respective single supply means ($4_i$); determining the weight of articles in each weighing hopper ($3_ia$, $3_ib$); computing total weights contained in different combinations of the plurality of weighing hoppers; discharging articles from those weighing hoppers for which the total weight of articles is closest to a desired weight; and supplying further articles from the supply means ($4_i$) to the weighing hoppers ($3_ia$, $3_ib$) which have discharged their articles.

9. A method according to claim 8, wherein combinations computed do not include articles contained in more than one weighing hopper ($3_ia$, $3_ib$) of each set.

## Patentansprüche

1. Vorrichtung zum Zuführen von zu wägenden Artikeln in einem automatischen Wägesystem, enthaltend mehrere Wägemaschinen ($2_ia$, $2_ib$), an denen jeweils ein Wägetrichter ($3_ia$, $3_ib$) befestigt ist, und eine erste Steuereinrichtung (51) zum Abgeben von Artikeln durch Öffnen nur solcher Tore von Wägetrichtern, die Artikel enthalten, deren Gesamtgewicht am besten mit einem gewünschten Gewicht übereinstimmt, wobei die Einrichtung mehrere Zuführeinrichtungen ($4_i$) enthält, die jeweils einem Paar Wägetrichtern ($3_ia$, $3_ib$) zugeordnet sind; Führungseinrichtungen ($8_i$), die jeder Zuführeinrichtung ($4_i$) zugeordnet sind, selektiv betätigbar sind, um zu bewirken, daß Artikel von der Zuführeinrichtung zu einem ausgewählten des Paares der Wägetrichter gelangen; eine Antriebseinrichtung ($10_i$), die bewirkt, daß Artikel von der Zuführeinrichtung ($4_i$) über die Führungseinrichtung ($8_i$) zu den Wägetrichtern ($3_ia$, $3_ib$) gelangen; und eine zweite Steuereinrichtung zur Steuerung des Betriebs der Antriebseinrichtung ($10_i$) in solcher Weise, daß, wenn die erste Steuereinrichtung einen Wägetrichter veranlaßt hat, seinen Inhalt abzugeben, die Zuführeinrichtung veranlaßt wird, weitere Artikel jenem Wägetrichter über die Führungseinrichtung zuzuführen.

2. Einrichtung nach Anspruch 1, bei der jede Zuführeinrichtung einen Gemeinschaftstrichter ($4_i$) aufweist, der ein Tor ($40_i$) enthält, das im Gebrauch oberhalb eines entsprechenden Paares Wägetrichtern ($3_ia$, $3_ib$) angeordnet ist, und jede Führungseinrichtung eine neigbare Schütte ($8_i$) enthält, die zwischen dem entsprechenden Gemeinschaftstrichter und dem entsprechenden Paar Wägetrichtern ($3_ia$, $3_ib$) angeordnet ist, um

Artikel in einen ausgewählten der Wägetrichter zu leiten.

3. Einrichtung nach Anspruch 1, bei der jede Zuführeinrichtung einen Gemeinschaftrichter $(60_i)$ enthält, der im Gebrauch oberhalb eines entsprechenden Paares Wägetrichtern $(3_ia, 3_ib)$ angeordnet ist, wobei jeder Gemeinschaftstrichter $(60_i)$ zwei Tore $(600_ia, 600_ib)$ aufweist, die jeweils einem der entsprechenden Wägetrichter im Gebrauch gegenüberstehen, wobei die zwei Tore die Führungseinrichtung bilden.

4. Einrichtung nach Anspruch 2 oder 3, bei der die Antriebseinrichtung $(10_i)$ die Tore der Gemeinschaftstrichter $(4_i)$ betätigt.

5. Einrichtung nach einem der vorhergehenden Ansprüche, bei der die Zuführeinrichtung $(4_i)$ und die Führungseinrichtung $(8_i)$ in gerader Linie angeordnet sind, um Paare von Wägetrichtern $(3_ia, 3_ib)$ zu versorgen, die längs einer geraden Linie angeordnet sind.

6. Einrichtung nach einem der Ansprüche 1 bis 4, bei der die Zuführeinrichtung $(4_i)$ und die Führungseinrichtung $(8_i)$ auf einem Kreis angeordnet sind, um Paare von Wägetrichtern $(3_ia, 3_ib)$, die auf einem Kreis angeordnet sind, zu versorgen.

7. Automatisches Wägesystem, enthaltend mehrere Paare von Wägemaschinen $(2_ia, 2_ib)$, von denen jede einen daran befestigten Wägetrichter $(3_ia, 3_ib)$ aufweist, mit einer ersten Steuereinrichtung (51) zum Abgeben von Artikeln durch Öffnen lediglich solcher Tore der Wägetrichter, die Artikel enthalten, deren Gesamtgewicht mit einem gewünschten Gewicht am besten übereinstimmt; und Einrichtung zum Zuführen von zu wägenden Artikeln nach einem der vorhergehenden Ansprüche, wobei die Antriebseinrichtung $(10_i)$ so angeordnet ist, daß sie das Tor eines jeden Wägetrichters $(3_ia, 3_ib)$ betreibt.

8. Verfahren zum Zuführen von Artikeln, das Verfahren enthaltend: Zuführen von Artikeln zu einer Mehrzahl von Wägetrichtersätzen (I—VI), von denen jeder aus einem Paar Wägetrichtern $(3_ia, 3_ib)$ besteht, die an den entsprechenden Wägemaschinen $(2_ia, 2_ib)$ befestigt sind, und jeder Satz einer jeweiligen einzelnen Zuführeinrichtung $(4_i)$ zugeordnet ist; Ermitteln des Gewichts von Artikeln in jedem Wägetrichter $(3_ia, 3_ib)$; Berechnen der Gesamtgewichte, die in unterschiedlichen Kombinationen der Mehrzahl von Wägetrichtern enthalten sind; Abgeben der Artikel aus solchen Wägetrichtern, für die das Gesamtgewicht der Artikel mit einem gewünschten Gewicht am besten übereinstimmt; und Zuführen weiterer Artikel von der Zuführeinrichtung $(4_i)$ zu den Wägetrichtern $(3_ia, 3_ib)$, die ihre Artikel abgegeben haben.

9. Verfahren nach Anspruch 8, bei dem berechnete Kombinationen nicht Artikel einschließen, die in mehr als einem Wägetrichter $(3_ia, 3_ib)$ eines jeden Satzes enthalten sind.

**Revendications**

1. Appareil de transmission d'objets à peser à un système de pesée automatique, du type comprenant plusieurs machines de pesée $(2_ia, 2_ib)$ ayant chacune une trémie de pesée $(3_ia, 3_ib)$ qui lui est fixée, et un premier dispositif de commande (51) destiné à évacuer les objets par ouverture uniquement des portes des trémies de pesée qui contiennent des objets dont le poids total correspond le plus étroitement à un poids voulu, l'appareil comprenant plusieurs dispositifs $(4_i)$ d'alimentation, associés chacun à une paire de trémies de pesée $(3_ia, 3_ib)$, un dispositif de guidage $(8_i)$ associé à chaque dispositif d'alimentation $(4_i)$ et destiné à être commandé sélectivement afin qu'il provoque le passage des objets du dispositif d'alimentation à une trémie choisie parmi la paire de trémies de pesée, un dispositif $(10_i)$ d'entraînement destiné à provoquer le passage des objets du dispositif d'alimentation $(4_i)$ aux trémies de pesée $(3_ia, 3_ib)$ par l'intermédiaire du dispositif de guidage $(8_i)$, et un second dispositif de commande du fonctionnement du dispositif d'entraînement $(10_i)$ de manière que, lorsque le premier dispositif de commande a provoqué l'évacuation de son contenu par une trémie de pesée, le dispositif d'alimentation provoque la transmission d'autres objets à cette trémie de pesée par l'intermédiaire du dispositif de guidage.

2. Appareil selon la revendication 1, dans lequel chaque dispositif d'alimentation comporte une trémie partagée $(4_i)$ ayant une porte $(40_i)$ qui, pendant l'utilisation, est placée au-dessus d'une paire respective de trémies de pesée $(3_ia, 3_ib)$, et chaque dispositif de guidage comporte une glissière pivotante $(8_i)$ placée entre la trémie partagée correspondante et la paire respective de trémies de pesée $(3_ia, 3_ib)$ afin que les objets soient dirigés vers une trémie choisie de pesée.

3. Appareil selon la revendication 1, dans lequel chaque dispositif d'alimentation comporte une trémie partagée $(60_i)$ qui, pendant l'utilisation, est placée au-dessus, d'une paire respective de trémies de pesée $(3_ia, 3_ib)$, chaque trémie partagée $(60_i)$ ayant deux portes $(600_ia, 600_ib)$ tournées vers des trémies correspondantes de pesée pendant l'utilisation, les deux portes constituant le dispositif de guidage.

4. Appareil selon l'une des revendications 2 et 3, dans lequel le dispositif d'entraînement $(10_i)$ commande les portes des trémies partagées $(4_i)$.

5. Appareil selon l'une quelconque des revendications précédentes, dans lequel le dispositif d'alimentation $(4_i)$ et le dispositif de guidage $(8_i)$ sont disposés en ligne droite afin qu'ils alimentent des paires de trémies de pesée $(3_ia, 3_ib)$ placées en ligne droite.

6. Appareil selon l'une quelconque des revendications 1 à 4, dans lequel le dispositif d'alimentation $(4_i)$ et le dispositif de guidage $(8_i)$ sont disposés en cercle de manière qu'ils alimentent les paires de trémies de pesée $(3_ia, 3_ib)$ disposées sur un cercle.

7. Système de pesée automatique comprenant plusieurs paires de machines de pesée $(2_ia, 2_ib)$ ayant chacune une trémie de pesée $(3_ia, 3_ib)$ qui

lui est fixée, et un premier dispositif de commande (51) destiné à évacuer des objets par ouverture uniquement des portes des trémies de pesée qui contiennent des objets dont le poids total correspond le plus étroitement à un poids voulu, et un appareil de transmission d'objets à peser selon l'une quelconque des revendications précédentes, le dispositif d'entraînement ($10_i$) étant disposé de manière qu'il manoeuvre la porte de chaque trémie de pesée ($3_i$a, $3_i$b).

8. Procédé de transmission d'objets, le procédé comprenant la transmission d'objets vers plusieurs jeux (I—VI) de trémies de pesée, chaque jeu comprenant une paire de trémies de pesée ($3_i$a, $3_i$b) fixées à des machines respectives de pesée ($2_i$a, $2_i$b), chaque jeu étant associé à un dispositif respectif unique d'alimentation ($4_i$), la détermination du poids des objets dans chaque trémie de pesée ($3_i$a, $3_i$b), le calcul des poids totaux contenus dans différentes combinaisons des trémies de pesée, l'évacuation d'objets des trémies de pesée telle que le poids total des objets est le plus proche d'un poids voulu, et la transmission d'objets supplémentaires par le dispositif d'alimentation ($4_i$) aux trémies de pesée ($3_i$a, $3_i$b) qui ont évacué leurs objets.

9. Procédé selon la revendication 8, dans lequel les combinaisons calculées ne comprennent pas d'objets contenus dans plus d'une trémie de pesée ($3_i$a, $3_i$b) de chaque jeu.

# Fig. 1

Fig. 3

Fig. 2

# Fig. 4

# Fig. 5

0 114 745

# Fig. 6

# Fig. 7

```
        ( S T A R T )
             │
   ┌─────────▼─────────┐
   │  APPLY SET SIGNAL  │──── S1
   │  TO FLIP-FLOP CIRCUIT │
   └─────────┬─────────┘
             │
   ┌─────────▼─────────┐
NO │   TIMING SIGNAL    │──── S2
   │   GENERATED ?      │
   └─────────┬─────────┘
            YES
   ┌─────────▼─────────┐
   │ GENERATE COMBINATION │──── S3
   │     PATTERN         │
   └─────────┬─────────┘
             │
YES┌─────────▼─────────┐
   │  PATTERN DOUBLING ? │──── S4
   └─────────┬─────────┘
            NO
   ┌─────────▼─────────┐
   │ PERFORM COMBINATORIAL │──── S5
   │ COMPUTATION IN ACCORDANCE │
   │   WITH PATTERN      │
   └─────────┬─────────┘
             │
NO ┌─────────▼─────────┐
   │  ALL COMBINATION   │──── S6
   │ PATTERNS GENERATED ? │
   └─────────┬─────────┘
            YES
NO ┌─────────▼─────────┐
   │ OPTIMUM COMBINATION │──── S7
   │   OBTAINED ?       │
   └─────────┬─────────┘
            YES
```

**S17** — SET DISCHARGE FLAG CORRESPONDING TO WEIGHING MACHINE INDICATING MINIMUM WEIGHT VALUE TO "H"

**S8** — SET DISCHARGE FLAGS TO "H" IN ACCORDANCE WITH OPTIMUM COMBINATION

**S9** — PRODUCE WEIGHING HOPPER OPENING SIGNALS IN ACCORDANCE WITH DISCHARGE FLAGS SET TO "H"

**S10** — READ OUT DISCHARGE FLAGS

**S11** — CHECK DISCHARGE FLAGS
  $Xia, Xib = \ulcorner L \lrcorner$
  $Xib = \ulcorner H \lrcorner$
  $Xia = \ulcorner H \lrcorner$

**S12** — IS 1st PHOTOSENSOR OUTPUT SIGNAL "H" ?
  YES / NO

**S14** — IS 2nd PHOTOSENSOR OUTPUT SIGNAL "H" ?
  YES / NO

**S13** — APPLY SET SIGNAL TO FLIP-FLOP CIRCUIT

**S15** — DISCHAGE FLAG READ-OUT COMPLETED ?
  NO / YES

**S16** — PRODUCE POOL HOPPER OPENING SIGNALS IN ACCORDANCE WITH DISCHARGE FLAGS SET TO "H"

5

# Fig. 8

| Pattern \ Weighing Machine | 21a | 21b | 22a | 22b | 23a | 23b | 24a | 24b | 25a | 25b | 26a | 26b | Pattern Doubling ? |
|---|---|---|---|---|---|---|---|---|---|---|---|---|---|
| 1 | O | | | | | | | | | | | | |
| 2 | | O | | | | | | | | | | | |
| 3 | O | O | | | | | | | | | | | YES |
| 4 | | | O | | | | | | | | | | |
| 5 | O | | O | | | | | | | | | | |
| 6 | | O | O | | | | | | | | | | |
| 7 | O | O | O | | | | | | | | | | YES |
| 8 | | | | O | | | | | | | | | |
| 9 | O | | | O | | | | | | | | | |
| 10 | | O | | O | | | | | | | | | |
| 11 | O | O | | O | | | | | | | | | YES |
| 12 | | | O | O | | | | | | | | | YES |
| 13 | O | | O | O | | | | | | | | | YES |
| 14 | | O | O | O | | | | | | | | | YES |
| 15 | O | O | O | O | | | | | | | | | YES |
| 16 | | | | | O | | | | | | | | |
| 17 | O | | | | O | | | | | | | | |
| 18 | | O | | | O | | | | | | | | |
| 19 | O | O | | | O | | | | | | | | YES |
| 20 | | | O | | O | | | | | | | | |
| ⋮ | | | | | | | | | | | | | |
| 2045 | O | | O | O | O | O | O | O | O | O | O | | YES |
| 2046 | | O | O | O | O | O | O | O | O | O | O | | YES |
| 2047 | O | O | O | O | O | O | O | O | O | O | | | YES |
| 2048 | | | | | | | | | | | | O | |
| 2049 | O | | | | | | | | | | | O | |
| 2050 | | O | | | | | | | | | | O | |
| 2051 | O | O | | | | | | | | | | O | YES |
| ⋮ | | | | | | | | | | | | | |
| 4091 | O | O | | O | O | O | O | O | O | O | O | O | YES |
| 4092 | | | O | O | O | O | O | O | O | O | O | O | YES |
| 4093 | O | | O | O | O | O | O | O | O | O | O | O | YES |
| 4094 | | O | O | O | O | O | O | O | O | O | O | O | YES |
| 4095 | O | O | O | O | O | O | O | O | O | O | O | O | YES |

# Fig. 9

| $X_{1a}$ | $X_{1b}$ | $X_{2a}$ | $X_{2b}$ | $X_{3a}$ | $X_{3b}$ | $X_{4a}$ | $X_{4b}$ | $X_{5a}$ | $X_{5b}$ | $X_{6a}$ | $X_{6b}$ |
|---|---|---|---|---|---|---|---|---|---|---|---|
| H | L | L | H | L | L | L | H | L | L | H | L |

# Fig. 10

# Fig. II

# Fig. 12

# Fig. 13

# Fig. 14

# Fig. 15

START

S₁ — TIMING SIGNAL GENERATED ? — NO — YES

S₂ — GENERATE COMBINATION PATTERN

S₃ — PATTERN DOUBLING ? — YES — NO

S₄ — PERFORM COMBINATORIAL COMPUTATION IN ACCORDANCE WITH PATTERN

S₅ — ALL COMBINATION PATTERNS GENERATED ? — NO — YES

S₆ — OPTIMUM COMBINATION OBTAINED ? — NO — YES

S₁₄ — SET DISCHARGE FLAG CORRESPONDING TO WEIGHING MACHINE INDICATING MINIMUM WEIGHT VALUE TO "H"

S₇ — SET DISCHARGE FLAGS TO "H" IN ACCRDANCE WITH OPTIMUM COMBINATION

S₈ — PRODUCE WEIGHING HOPPER OPENING SIGNALS IN ACCORDANCE WITH DISCHARGE FLAGS SET TO "H"

S₉ — READ OUT DISCHARGE FLAGS

CHECK DISCHARGE FLAGS — Xia,Xib="L" — Xib="H"

S₁₀ — Xia="H"

S₁₁ — PRODUCE POOL HOPPER 1st GATE OPENING SIGNAL

S₁₂ — PRODUCE POOL HOPPER 2nd GATE OPENING SIGNAL

S₁₃ — DISCHAGE FLAG READ-OUT COMPLETED ? — NO — YES

11

# Fig. 16